# FASCICULE DE BREVET EUROPEEN

(11) **EP 3 656 632 B1**
(45) Date de publication et mention de la délivrance du brevet: **28.07.2021**
(21) Numéro de dépôt: 19210520.3
(22) Date de dépôt: 21.11.2019
(51) Int. Cl.: B61D 17/10, D06N 7/00, B61D 17/18, B32B 7/12, B32B 21/02, B32B 21/04

(54) **REVÊTEMENT INTÉRIEUR D'UN VÉHICULE, NOTAMMENT FERROVIAIRE, COMPORTANT UNE COUCHE DE PROTECTION, ET VÉHICULE, NOTAMMENT FERROVIAIRE, UTILISATION, ET PROCÉDÉ DE REMPLACEMENT ASSOCIÉ**
INNENVERKLEIDUNG EINES FAHRZEUGS, INSBESONDERE EINES SCHIENENFAHRZEUGS, DIE EINE SCHUTZSCHICHT UMFASST, UND FAHRZEUG, INSBESONDERE SCHIENENFAHRZEUG, SOWIE ENTSPRECHENDES AUSTAUSCHVERFAHREN
INTERIOR COATING OF A VEHICLE, IN PARTICULAR A RAILWAY VEHICLE, COMPRISING A PROTECTIVE LAYER, AND VEHICLE, IN PARTICULAR A RAILWAY VEHICLE, USE, AND ASSOCIATED REPLACEMENT METHOD

(30) Priorité: 21.11.2018 FR 1871675
(43) Date de publication de la demande: 27.05.2020
(73) Titulaire: ALSTOM Transport Technologies, 93400 Saint-Ouen (FR)
(72) Inventeur: PAILLER, Christophe, 17180 PERIGNY (FR)
(74) Mandataire: Lavoix

(56) Documents cités:
- EP-A1- 0 268 875
- EP-A1- 2 883 695
- WO-A1-96/18766
- DE-U1- 9 113 755
- GB-A- 2 228 675

## Description

La présente invention concerne un revêtement intérieur d'un véhicule, notamment d'un véhicule ferroviaire, comportant :
- un support en contreplaqué orienté vers l'extérieur du véhicule, le support comprenant au moins deux plis, et
- une moquette autoadhésive orientée vers l'intérieur du véhicule, la moquette comprenant une couche adhésive en regard du support, la couche adhésive (24) étant collée sur le support.

Un tel revêtement est par exemple utilisé pour couvrir un plancher d'un véhicule ferroviaire. Le support garantit l'intégrité structurelle du revêtement, et la moquette est en contact avec les pieds de passagers dans le véhicule ferroviaire.

GB 2 228 675 A divulgue un revêtement intérieur d'un véhicule.

DE 91 13 755 U1 divulgue un revêtement formé par plusieurs couches.

Un tel revêtement ne donne cependant pas entière satisfaction. En effet, lors d'un éventuel changement de la moquette, les plis du support risquent d'être détachés les uns des autres.

Un but de l'invention est donc de proposer un revêtement intérieur avec un support dont les plis restent attachés lorsque la moquette est remplacée.

A cet effet, l'invention a pour objet un revêtement du type précité, dans lequel le revêtement intérieur comporte également une couche de protection du support interposée entre la moquette et le support, la couche de protection étant apte à empêcher que les plis se détachent les uns des autres lorsque la moquette est détachée du support.

Le revêtement intérieur selon l'invention peut comprendre l'une ou plusieurs des caractéristiques suivantes, prise(s) isolément ou suivant toutes combinaisons techniquement possibles :
- la couche de protection est réalisée en résine phénolique.
- la couche de protection présente une masse surfacique inférieure à 220 g/m², avantageusement inférieure à 120 g/m².
- la moquette comprend également une couche de poils orientée vers l'intérieur du véhicule et une couche en mousse interposée entre la couche de poils et la couche adhésive.
- la résistance au pelage entre la couche de protection et la couche adhésive est inférieure à la résistance au pelage entre la couche adhésive et la couche en mousse, et inférieure à la résistance au pelage entre la couche en mousse et la couche de poils.

L'invention a également pour objet un véhicule, notamment un véhicule ferroviaire, comportant un revêtement intérieur tel que décrit ci-dessus.

L'invention a également pour objet une utilisation d'une couche de protection de véhicule, notamment de véhicule ferroviaire, le revêtement intérieur comportant :
- un support en contreplaqué orienté vers l'extérieur du véhicule, le support comprenant au moins deux plis, et
- une moquette autoadhésive orientée vers l'intérieur du véhicule, la moquette comprenant une couche adhésive en regard du support, la couche adhésive étant collée sur le support,
pour empêcher que les plis du support se détachent les uns des autres lorsque la moquette est détachée du support avec la couche de protection interposée entre la moquette et le support.

L'invention a en outre pour objet un procédé de remplacement d'une moquette d'un revêtement intérieur, le procédé comportant les étapes suivantes :
- détachement de la moquette par rapport au support, par rupture de la liaison adhésive créée par la couche adhésive entre la moquette et le support ; et
- collage d'une nouvelle moquette sur le support.

L'invention sera mieux comprise à la lecture de la description qui va suivre, donnée uniquement à titre d'exemple, et faite en se référant aux dessins annexés sur lesquels :
[Fig 1] la Figure 1 est une représentation schématique d'un véhicule comportant un revêtement intérieur selon l'invention ;
[Fig 2] la Figure 2 est une vue en coupe du revêtement intérieur selon l'invention ; et
[Fig 3] la Figure 3 est une vue similaire à la Figure 2, la moquette étant partiellement détachée du support.

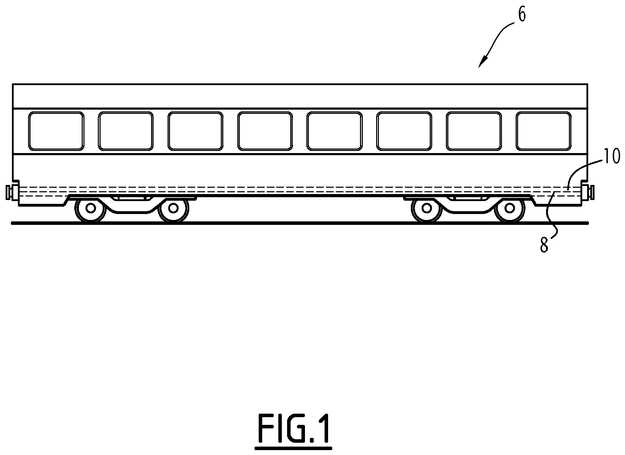

La Figure 1 illustre un véhicule 6, comportant un plancher 8 et un revêtement intérieur 10 couvrant le plancher 8.

Le véhicule 6 est par exemple un véhicule ferroviaire ou un bus. Sur la Figure 1, le véhicule 6 est un véhicule ferroviaire.

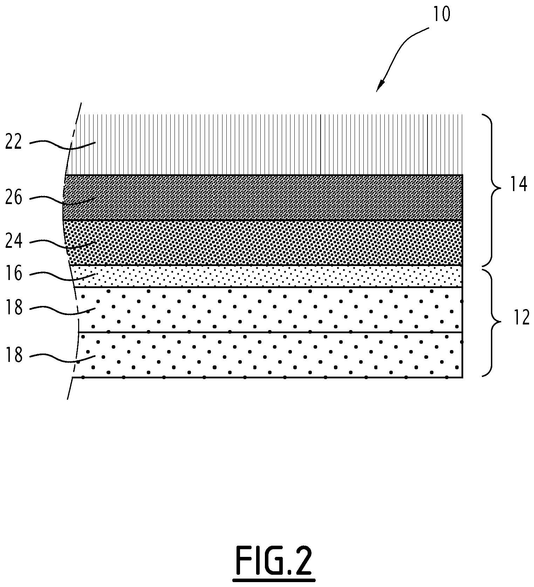

En référence à la Figure 2, le revêtement intérieur 10 comporte un support 12 orienté vers l'extérieur du véhicule, une moquette autoadhésive 14 orientée vers l'intérieur du véhicule, et une couche de protection 16 interposée entre le support 12 et la moquette 14.

Le support 12 est en contreplaqué. Il comprend au moins deux plis 18 collés l'un sur l'autre. Les plis 18 sont notamment des feuilles de bois disposées à fils croisés.

La moquette 14 comprend une couche de poils 22 orientée vers l'intérieur du véhicule, une couche adhésive 24 en regard du support 12, et une couche en mousse 26 interposée entre la couche de poils 22 et la couche adhésive 24.

La moquette 14 est en contact avec les pieds de passagers. Elle présente une masse surfacique comprise entre 1,2 kg/m² et 1,8 kg/m², qui vaut avantageusement 1,5 kg/m².

La couche adhésive 24 est collée sur la couche de protection 16.

La couche adhésive 24 est apte à empêcher une migration des agents plastifiants de la couche en mousse 26 vers la couche de protection 16.

La couche en mousse 26 est par exemple réalisée en polychlorure de vinyle.

La couche de protection 16 est déposée sur le support 12.

La couche de protection 16 est apte à empêcher un détachement des plis 18 les uns des autres lorsque la moquette 14 est détachée du support 12.

La couche de protection 16 est réalisée en résine phénolique. Ceci permet d'améliorer la résistance au feu du support 12.

La couche de protection 16 présente une masse surfacique inférieure à 220 g/m², avantageusement inférieure à 120 g/m².

La résistance au pelage entre la couche de protection 16 et la couche adhésive 24 est inférieure à la résistance au pelage entre la couche adhésive 24 et la couche en mousse 26. La résistance au pelage entre la couche de protection 16 et la couche adhésive 24 est inférieure à la résistance au pelage entre la couche en mousse 26 et la couche de poils 22.

La résistance au pelage est mesurée selon la norme NF EN 1372 de février 2000.

Avantageusement, la couche de protection 16 est également apte à améliorer la durabilité du support 12.

Avantageusement, la couche de protection 16 est également apte à améliorer l'imperméabilité du support 12.

La couche de protection 16 est utilisée de manière à empêcher que les plis 18 du support 12 se détachent les uns des autres lorsque la moquette 14 est détachée du support 12.

Plus précisément, lors de l'utilisation normale du revêtement intérieur 10, la moquette 14 est collée sur la couche de protection 16 à l'aide de la couche adhésive 24, et la couche de protection 16 est collée sur le support 12.

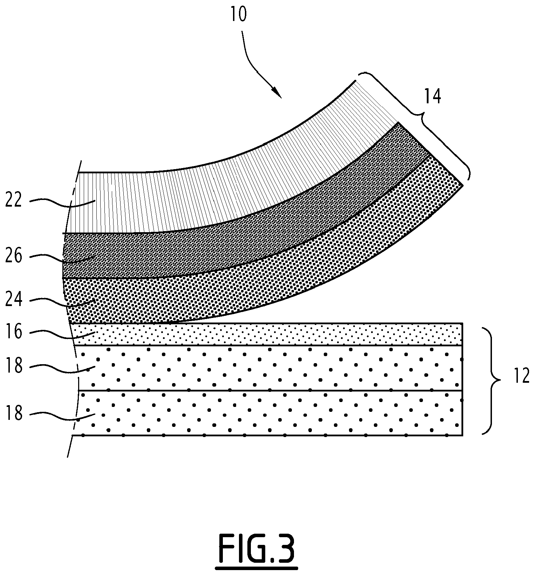

Lors d'un remplacement de la moquette 14 en la détachant du support 12, la couche de protection 16 résiste à la force de détachement exercée par la couche adhésive 24 sur les plis 18. Les plis 18 restent alors collés les uns avec les autres sans être détachés sous l'effet de la force de détachement, comme représenté sur la Figure 3.

Le procédé de remplacement de la moquette 14 va maintenant être décrit.

D'abord, la moquette 14 à remplacer est détachée par rapport au support 12. Ce détachement est effectué par rupture de la liaison adhésive créée par la couche adhésive 24 entre la moquette 14 et le support 12. Grâce à la présence de la couche de protection 16, les plis 18 du support 12 restent attachés les uns aux autres sans détachement les uns des autres.

Ensuite, une nouvelle moquette 14 est disposée sur la couche de protection 16. La nouvelle moquette 14 est collée sur le support 12 par la couche adhésive 24. Ainsi la moquette 14 du revêtement intérieur 10 est remplacée.

Grâce à l'invention décrite ci-dessus, lors de remplacement d'une moquette 14 usagée du revêtement 10, le risque de détachement des plis 18 du support 12 est sensiblement réduit. Ceci permet des remplacements fréquents de la moquette 14, tout en assurant l'intégrité du support 12 et en évitant que les plis 18 se séparent les uns des autres. Ceci évite des remplacements non-nécessaires du support 12.

## Revendications

1. Revêtement intérieur (10) d'un véhicule, notamment d'un véhicule ferroviaire, comportant :
- un support (12) en contreplaqué orienté vers l'extérieur du véhicule, le support (12) comprenant au moins deux plis (18), et
- une moquette (14) autoadhésive orientée vers l'intérieur du véhicule, la moquette (14) comprenant une couche adhésive (24) en regard du support (12), la couche adhésive (24) étant collée sur le support (12),
le revêtement intérieur (10) comportant également une couche de protection (16) du support (12) interposée entre la moquette (14) et le support (12), la couche de protection (16) étant apte à empêcher que les plis (18) se détachent les uns des autres lorsque la moquette (14) est détachée du support (12).

2. Revêtement intérieur (10) selon la revendication 1, dans lequel la couche de protection (16) est réalisée en résine phénolique.

3. Revêtement intérieur (10) selon l'une quelconque des revendications précédentes, dans lequel la couche de protection (16) présente une masse surfacique inférieure à 220 g/m², avantageusement inférieure à 120 g/m².

4. Revêtement intérieur (10) selon l'une quelconque des revendications précédentes, dans lequel la moquette (14) comprend également une couche de poils (22) orientée vers l'intérieur du véhicule et une couche en mousse (26) interposée entre la couche de poils (22) et la couche adhésive (24).

5. Revêtement intérieur (10) selon l'une quelconque des revendications précédentes, dans laquelle la résistance au pelage entre la couche de protection (16) et la couche adhésive (24) est inférieure à la résistance au pelage entre la couche adhésive (24) et la couche en mousse (26), et inférieure à la résistance au pelage entre la couche en mousse (26) et la couche de poils (22).

6. Véhicule, notamment ferroviaire, comportant un revêtement intérieur (10) selon l'une quelconque des revendications précédentes.

7. Utilisation d'une couche de protection (16) dans un revêtement intérieur (10) de véhicule, notamment d'un véhicule ferroviaire, le revêtement intérieur (10) comportant :
- un support (12) en contreplaqué orienté vers l'extérieur du véhicule, le support (12) comprenant au moins deux plis (18), et
- une moquette (14) autoadhésive orientée vers l'intérieur du véhicule, la moquette (14) comprenant une couche adhésive (24) en regard du support (12), la couche adhésive (24) étant collée sur le support (12),
pour empêcher que les plis (18) du support (12) se détachent les uns des autres lorsque la moquette (14) est détachée du support (12) avec la couche de protection (16) interposée entre la moquette (14) et le support (12).

8. Procédé de remplacement d'une moquette (14) d'un revêtement intérieur (10) selon l'une quelconque des revendications 1 à 5, le procédé comportant les étapes suivantes :
- détachement de la moquette (14) par rapport au support (12), par rupture de la liaison adhésive créée par la couche adhésive (24) entre la moquette (14) et le support (12) ;
- collage d'une nouvelle moquette (14) sur le support (12).

## Patentansprüche

1. Innenverkleidung (10) eines Fahrzeugs, insbesondere eines Schienenfahrzeugs, aufweisend:
- einen Träger (12) aus Sperrholz, der zur Außenseite des Fahrzeugs hin orientiert ist, wobei der Träger (12) wenigstens zwei Lagen (18) aufweist, und
- einen selbstklebenden Teppich (14), der zur Innenseite des Fahrzeugs hin orientiert ist, wobei der Teppich (14) eine dem Träger (12) gegenüberliegende Klebeschicht (24) aufweist,
wobei die Klebeschicht (24) auf den Träger (12) geklebt ist, wobei die Innenverkleidung (10) ferner eine Schutzschicht (16) für den Träger (12) aufweist, die zwischen dem Teppich (14) und dem Träger (12) angeordnet ist, wobei die Schutzschicht (16) imstande ist zu verhindern, dass die Lagen (18) sich voneinander lösen, wenn der Teppich (14) von dem Träger (12) abgemacht wird.

2. Innenverkleidung (10) gemäß Anspruch 1, wobei die Schutzschicht (16) aus Phenolharz realisiert ist.

3. Innenverkleidung (10) gemäß irgendeinem der vorhergehenden Ansprüche, wobei die Schutzschicht (16) eine Innenflächenmasse von kleiner als 220 g/m², vorteilhafterweise von kleiner als 120 g/m² hat.

4. Innenverkleidung (10) gemäß irgendeinem der vorhergehenden Ansprüche, wobei der Teppich (14) ferner eine Glanz-Schicht (22), die zur Innenseite des Fahrzeugs hin orientiert ist, und eine Schaumschicht (26) aufweist, die zwischen der Glanz-Schicht (22) und der Klebeschicht (24) angeordnet ist.

5. Innenverkleidung (10) gemäß irgendeinem der vorhergehenden Ansprüche, wobei der Widerstand gegen Abschälen zwischen der Schutzschicht (16) und der Klebeschicht (24) kleiner ist als der Widerstand gegen Abschälen zwischen der Klebeschicht (24) und der Schaumschicht (26) und kleiner ist als der Widerstand gegen Abschälen zwischen der Schaumschicht (26) und der Glanz-Schicht (22).

6. Fahrzeug, insbesondere für die Schiene, aufweisend eine Innenverkleidung (10) gemäß irgendeinem der vorhergehenden Ansprüche.

7. Verwendung einer Schutzschicht (16) in einer Innenverkleidung (10) eines Fahrzeugs, insbesondere eines Schienenfahrzeugs, wobei die Innenverkleidung (10) aufweist:
- einen Träger (12) aus Sperrholz, der zur Außenseite des Fahrzeugs hin orientiert ist, wobei der Träger (12) wenigstens zwei Lagen (18) aufweist, und
- einen selbstklebenden Teppich (14), der zur Innenseite des Fahrzeugs hin orientiert ist, wobei der Teppich (14) eine dem Träger (12) gegenüberliegende Klebeschicht (24) aufweist,
wobei die Klebeschicht (24) auf den Träger (12) geklebt ist, zum Verhindern, dass die Lagen (18) des Trägers (12) sich voneinander lösen, wenn der Teppich (14) von dem Träger (12) abgemacht wird, wobei die Schutzschicht (16) zwischen dem Teppich (14) und dem Träger (12) angeordnet ist.

8. Verfahren zum Ersetzen eines Teppichs (14) einer Innenverkleidung (10) gemäß irgendeinem der Ansprüche 1 bis 5, wobei das Verfahren die folgenden Schritte aufweist:
- Abmachen des Teppichs (14) von dem Träger (12) durch Trennen der mittels der Klebeschicht (24) erzeugten Klebeverbindung zwischen dem Teppich (14) und dem Träger (12),
- Kleben eines neuen Teppichs (14) auf den Träger (12).

## Claims

1. Interior covering (10) of a vehicle, especially of a railway vehicle, comprising:
- a support (12) made of plywood oriented towards the outside of the vehicle, the support (12) comprising at least two plies (18), and
- a self-adhesive carpet (14) oriented towards the inside of the vehicle, the carpet (14) comprising an adhesive layer (24) facing the support (12), the adhesive layer (24) being adhesively bonded to the support (12),
the interior covering (10) also comprising a protective layer (16) for protecting the support (12), which protective layer is interposed between the carpet (14) and the support (12), the protective layer (16) being capable of preventing the plies (18) from becoming detached from one another when the carpet (14) is detached from the support (12).

2. Interior covering (10) according to claim 1, wherein the protective layer (16) is made of phenolic resin.

3. Interior covering (10) according to any one of the preceding claims, wherein the protective layer (16) has a mass per unit area of less than 220 g/m², advantageously less than 120 g/m².

4. Interior covering (10) according to any one of the preceding claims, wherein the carpet (14) also comprises a layer of bristles (22) oriented towards the inside of the vehicle and a layer of foam (26) interposed between the layer of bristles (22) and the adhesive layer (24).

5. Interior covering (10) according to any one of the preceding claims, wherein the peel strength between the protective layer (16) and the adhesive layer (24) is less than the peel strength between the adhesive layer (24) and the layer of foam (26) and less than the peel strength between the layer of foam (26) and the layer of bristles (22).

6. Vehicle, especially railway vehicle, comprising an interior covering (10) according to any one of the preceding claims.

7. Use of a protective layer (16) in an interior covering (10) of a vehicle, especially of a railway vehicle, the interior covering (10) comprising:
- a support (12) made of plywood oriented towards the outside of the vehicle, the support (12) comprising at least two plies (18), and
- a self-adhesive carpet (14) oriented towards the inside of the vehicle, the carpet (14) comprising an adhesive layer (24) facing the support (12), the adhesive layer (24) being adhesively bonded to the support (12),
for preventing the plies (18) of the support (12) from becoming detached from one another when the carpet (14) is detached from the support (12) with the protective layer (16) interposed between the carpet (14) and the support (12).

8. Method for replacing a carpet (14) of an interior covering (10) according to any one of claims 1 to 5, the method comprising the following steps:
- detaching the carpet (14) relative to the support (12) by breaking the adhesive bond created by the adhesive layer (24) between the carpet (14) and the support (12);
- adhesively bonding a new carpet (14) to the support (12).
